# EUROPÄISCHE PATENTSCHRIFT

(11) **EP 3 234 641 B1**
(45) Veröffentlichungstag und Bekanntmachung des Hinweises auf die Patenterteilung: **06.09.2023**
(21) Anmeldenummer: 15805135.9
(22) Anmeldetag: 01.12.2015
(51) Int. Cl.: G01S 17/48, G01S 7/481, A47L 9/28, A47L 9/30, G01S 17/931, G05D 1/02

(54) **SELBSTTÄTIG VERFAHRBARES REINIGUNGSGERÄT**
AUTOMATICALLY MOVABLE CLEANING DEVICE
DISPOSITIF DE NETTOYAGE DÉPLAÇABLE DE FAÇON AUTONOME

(30) Priorität: 15.12.2014 DE 102014118605; 19.01.2015 DE 102015100706
(43) Veröffentlichungstag der Anmeldung: 25.10.2017
(73) Patentinhaber: Vorwerk & Co. Interholding GmbH, 42275 Wuppertal (DE)
(72) Erfinder: STRANG, Benjamin, 42651 Solingen (DE)
(74) Vertreter: Müller, Enno
(86) Internationale Anmeldenummer: PCT/EP2015/078135
(87) Internationale Veröffentlichungsnummer: WO 2016/096394

(56) Entgegenhaltungen:
- WO-A1-00/08512
- DE-A1- 19 813 456
- DE-A1-102008 014 912
- US-A- 5 124 859
- US-A- 5 336 900

## Beschreibung

Die Erfindung betrifft ein selbsttätig verfahrbares Reinigungsgerät, insbesondere einen elektromotorisch angetriebenen Saug- und/oder Wischroboter, mit einer Abstandsmesseinrichtung zur Messung des Abstandes des Reinigungsgerätes zu einem Objekt, wobei die Abstandsmesseinrichtung ein optisches Triangulationssystem mit einer Lichtquelle, einem optischen Filter und einem Detektor aufweist, welche so angeordnet sind, dass von der Lichtquelle emittiertes Licht in Propagationsrichtung zuerst von dem Objekt gestreut wird, wobei zumindest ein Anteil des gestreuten Lichtes anschließend mittels des optischen Filters spektral gefiltert wird und wobei das gefilterte Licht schließlich von dem Detektor detektiert wird.

Selbsttätig verfahrbare Reinigungsgeräte mit einer solchen Abstandsmesseinrichtung sind im Stand der Technik bekannt. Das Reinigungsgerät verfährt selbsttätig bspw. in einer Wohnung und nimmt hierbei Abstandsdaten der Umgebung auf. Hierzu ist es bekannt, die Abstandsmesseinrichtung mit Mitteln zur Rundum-Abstandsmessung (360°) zu versehen, bspw. in Form eines optischen Triangulationssystems, welches auf einer um eine vertikale Achse rotierenden Plattform oder dergleichen angeordnet ist.

Die Veröffentlichung DE 10 2008 014 912 A1 offenbart beispielsweise ein selbsttätig verfahrbares Reinigungsgerät mit einer Abstandsmesseinrichtung zur Messung des Abstandes des Reinigungsgerätes zu einem Objekt, beispielsweise einem Hindernis wie einer Wand oder einem Möbelstück. Die Abstandsmesseinrichtung weist ein Triangulationssystem auf, dessen Lichtquelle Licht auf das zu vermessende Objekt strahlt. Die Messung erfolgt von zwei verschiedenen Positionen des Reinigungsgerätes aus, wobei aufgrund der Winkel des von dem Objekt gestreuten (reflektierten) Lichtes auf die Entfernung des Objektes zu dem Reinigungsroboter geschlossen werden kann. Das Reinigungsgerät erhält somit eine Information über die Entfernung von Hindernissen, so dass er seine Verfahrstrategie darauf abstimmen und einen Kontakt mit Hindernissen im Voraus vermeiden kann.

Die bekannten Triangulationssysteme verfügen über eine Lichtquelle, einen optischen Filter und einen Detektor. Die Lichtquelle ist beispielsweise eine optische Laserdiode. Der optische Filter ist üblicherweise ein Bandpassfilter, welcher ausgebildet ist, das von der Lichtquelle emittierte Licht zu transmittieren, das heißt durchzulassen, und Umgebungslicht zu sperren, das heißt zu reflektieren oder zu absorbieren. Die Mittenfrequenz des Bandpassfilters, das heißt das geometrische Mittel (bzw. in Näherung das arithmetische Mittel) zwischen der unteren und der oberen Grenzfrequenz des Filterfrequenzbandes entspricht vorteilhaft der Laserwellenlänge.

Nachteilig bei den verwendeten optischen Filtern ist, dass diese häufig einen nur geringen Transmissionsgrad aufweisen. Ein Bandpassfilter, welcher eine zu der Wellenlänge von 785nm korrespondierende Mittenfrequenz aufweist und als Interferenzfilter ausgebildet ist, besitzt üblicherweise einen Transmissionsgrad von höchstens 90%. Dementsprechend wird ein großer Anteil, nämlich mindestens 10%, des Lichtes reflektiert und/oder absorbiert und trägt nicht zum Detektionsergebnis bei. Somit reduziert sich die Signalstärke des von dem Detektor empfangenen Signals, was gegebenenfalls die Messgenauigkeit beeinflussen kann.

Darüber hinaus ist es bei der üblichen Bauweise der Abstandsmesseinrichtung innerhalb des Reinigungsgerätes notwendig, den optischen Filter, nämlich den Bandpassfilter, und den Detektor auf zwei separaten, orthogonal zueinander stehenden Leiterplatten anzuordnen. Dabei ist der Bandpassfilter auf einer ersten Leiterplatte angeordnet, während der Detektor auf einer zweiten, senkrecht dazu stehenden Leiterplatte angeordnet ist. Diese Anordnung ergibt sich zwangsläufig durch die transmittierende Eigenschaft des Bandpassfilters, wobei das transmittierte Licht parallel zu der ersten Leiterplatte durch den Bandpassfilter propagiert und dann auf den senkrecht zu der Strahlrichtung, und damit auch senkrecht zu der ersten Leiterplatte, angeordneten Detektor trifft. Nachteilig an dem Stand der Technik ist somit, dass die elektrischen Komponenten auf zwei separate Leiterplatten aufgeteilt sind. Die damit verbundene mehradrige elektrische Verbindung zwischen den beiden Leiterplatten wird von Hand gelötet oder zusammengesteckt und ist somit fehleranfällig.

Des Weiteren sind andere Entfernungsmessgeräte bekannt, die nicht als optische Triangulationssysteme ausgebildet sind, aber zumindest teilweise reflektierende Filter aufweisen. Die Druckschrift WO 00/08512 A1 offenbart beispielsweise ein optisches Entfernungsmessgerät mit einem metallischen reflektierenden Beamsplitter, welcher einen Reflektionsgrad von 98% aufweist, und einen nachgeordneten Bandpassfilter sowie einen Detektor. Das Dokument DE 198 134 56 A1 beschreibt einen optischen Filter mit einem lediglich geringen Reflektionsgrad. Die Veröffentlichung US 5,124,859 A beschreibt einen optischen Empfänger mit einem bei einer Resonanzfrequenz reflektierenden Filter und einem Detektor.

Es ist somit Aufgabe der Erfindung, ein Reinigungsgerät mit einer Abstandsmesseinrichtung zu schaffen, bei welchem die obigen Nachteile vermieden werden.

Zur Lösung schlägt die Erfindung zunächst gemäß Anspruch 1 ein selbsttätig verfahrbares Reinigungsgerät mit einer Abstandsmesseinrichtung vor, bei welcher das optische Triangulationssystem in Bezug auf eine Leiterplatte so angeordnet ist, dass das von dem Objekt gestreute Licht parallel zu der Leiterplatte propagiert bevor es auf den optischen Filter trifft, und wobei das Licht durch den optischen Filter umgelenkt wird, so dass es in eine Richtung senkrecht zu der Leiterplatte propagiert, wobei der Detektor auf derselben Leiterplatte angeordnet ist, und wobei der optische Filter ein Bandstoppfilter mit einem Reflexionsgrad von mindestens 90% in Bezug auf mindestens eine Wellenlänge des gestreuten Lichtes ist, und wobei das Triangulationssystem zwei Detektoren aufweist, wobei ein erster Detektor bezogen auf den optischen Filter in Reflexionsrichtung angeordnet ist, um einen von dem optischen Filter reflektierten ersten Lichtanteil zu detektieren, und wobei ein zweiter Detektor bezogen auf den optischen Filter in Transmissionsrichtung angeordnet ist, um einen von dem optischen Filter transmittierten zweiten Lichtanteil zu detektieren.

Gemäß der Erfindung wird der im Stand der Technik zur Ausbildung des Triangulationssystems verwendete Bandpassfilter nun durch einen Bandstoppfilter ersetzt. Dies hat zur Auswirkung, dass das auf den optischen Filter treffende Licht nun nicht mehr von dem optischen Filter transmittiert wird, sondern vielmehr von dem optischen Filter reflektiert wird. Dadurch ändert sich die Propagationsrichtung des von dem Objekt gestreuten Lichtes. Sofern das optische Triangulationssystem in Bezug auf die Leiterplatte so angeordnet ist, dass das von dem Objekt gestreute Licht parallel zu der Leiterplatte propagiert, bevor es auf den optischen Filter trifft, wird das Licht nun durch den reflektierenden optischen Filter, das heißt den Bandstoppfilter, umgelenkt und propagiert in eine Richtung senkrecht zu der Leiterplatte, so dass der Detektor nunmehr unmittelbar auf derselben Leiterplatte angeordnet werden kann und es keiner zweiten Leiterplatte zur Anordnung des Sensors bedarf. Die vorgenannten Ausführungen gelten für den Fall, dass der optische Filter relativ zu dem einfallenden Lichtbündel so angeordnet ist, dass der Einfallswinkel des Lichtes auf dem optischen Filter 45° beträgt. Dabei ergibt sich zwischen dem einfallenden und dem reflektierten Licht ein Winkel von 90°. Da gleichzeitig auch die Notwendigkeit wegfällt, eine zweite Leiterplatte zu verwenden, können die im Stand der Technik noch erforderlichen elektrischen Verbindungen zwischen der ersten Leiterplatte und einer zweiten Leiterplatte entfallen, welche manuell hergestellt werden müssten und somit fehleranfällig sind. Ebenfalls reduziert sich der Montageaufwand, da nunmehr alle Komponenten auf einer gemeinsamen Leiterplatte untergebracht werden können. Nicht zuletzt wird auch die Qualität der Signalübertragung verbessert. Schließlich entsteht durch die erfindungsgemäße Ausbildung auch eine kompaktere Bauform der Abstandsmesseinrichtung, welche zur Unterbringung in dem Gehäuse des Reinigungsgerätes vorteilhaft ist.

Durch die erfindungsgemäße Verwendung eines bevorzugt als Interferenzspiegel ausgebildeten Bandstoppfilters als optischer Filter des Triangulationssystems ergibt sich zudem der Vorteil des höheren Reflexionsgrades des optischen Filters. Gegenüber den Bandpassfiltern, welche in Bezug auf die Mittenfrequenz regelmäßig einen Transmissionsgrad von höchstens 90% aufweisen, haben Bandstoppfilter typischerweise einen Reflexionsgrad von mehr als 90%, bezogen auf die Mittenfrequenz. Im Sinne der Erfindung empfiehlt es sich, einen Bandstoppfilter mit einem Reflexionsgrad von mindestens 90% zu verwenden, bevorzugt sind jedoch Bandstoppfilter mit noch höheren Reflexionsgraden, beispielsweise 99% oder 99,5% der Lichtintensität (bezogen auf die Mittenfrequenz). Durch den höheren Reflexionsgrad im Verhältnis zum Transmissionsgrad eines Bandpassfilters ergibt sich eine höhere Intensität des auf den Detektor treffenden Lichtanteils (bei konstanter Intensität des von der Lichtquelle emittierten Lichtes), so dass auch ein schwach streuendes bzw. weit entferntes Objekt noch detektiert und die Entfernung gemessen werden kann.

Bandstoppfilter (auch Bandsperren genannt) weisen in der Regel ein Reflexionsspektrum auf, welches nicht nur bei einer einzigen Wellenlänge einen hohen Reflexionsgrad zeigt. Vielmehr weist das Reflexionsspektrum regelmäßig über einen größeren Frequenzbereich hohe Reflexionsgrade auf. Diejenigen spektralen Lichtanteile, welche nicht in den hochreflektiven Frequenzbereich des Bandstoppfilters fallen, werden entweder transmittiert oder absorbiert und tragen somit nicht zu dem reflektierten Lichtanteil bei. Insgesamt ergibt sich somit im Reflexionsspektrum eines Bandstoppfilters (x-Achse: Wellenlänge bzw. Frequenz, y-Achse: Reflexionsgrad) in Bezug auf Wellenlängen bzw. Frequenzen außerhalb des Reflexionsmaximums ein Reflexionsgrad, welcher gegen null geht. In Bezug auf das Reflexionsspektrum sind Grenzfrequenzen, nämlich eine obere und eine untere Grenzfrequenz, definiert, bei denen das Verhältnis von reflektiertem Lichtanteil zu einfallendem Lichtanteil 70,7% beträgt, das heißt die Reduktion gegenüber dem Maximalwert 3dB entspricht. Als Filterkenngrö-βe ist daraus eine sogenannte Mittenfrequenz abgeleitet, welche das geometrische Mittel aus der oberen und unteren Grenzfrequenz bildet. Üblicherweise wählt man einen Bandstoppfilter so aus, dass dessen Mittenfrequenz im Wesentlichen der Wellenlänge des verwendeten Lichts entspricht. Sofern ein optischer Aufbau beispielsweise eine Laserdiode mit einer Wellenlänge von 785nm aufweist, wird vorteilhaft ein Bandstoppfilter verwendet, dessen Mittenfrequenz im Wesentlichen dieser Wellenlänge entspricht, das heißt eine Mittenfrequenz von ungefähr 380THz.

Erfindungsgemäß weist das Triangulationssystem zwei Detektoren auf, wobei ein erster Detektor bezogen auf den optischen Filter in Reflexionsrichtung angeordnet ist, um einen von dem optischen Filter reflektierten ersten Lichtanteil zu detektieren, und wobei ein zweiter Detektor bezogen auf den optischen Filter in Transmissionsrichtung angeordnet ist, um einen von dem optischen Filter transmittierten zweiten Lichtanteil zu detektieren. Dabei wird der von dem Bandstoppfilter transmittierte zweite Lichtanteil auf einen zweiten Detektor geleitet, welcher auf derjenigen Seite des optischen Filters angeordnet ist, welche von dem ersten Detektor weg weist. Das transmittierte Licht, welches auf den zweiten Detektor trifft, weist eine Wellenlänge auf, welche außerhalb des Reflexionsmaximums des Bandstoppfilters liegt. Insofern ist es möglich, ein zweites Signal des Triangulationssystems, welches eine zweite Wellenlänge aufweist, auszuwerten. Beispielsweise ist es möglich, als Lichtquelle eine Quelle mit mindestens zwei Emissionswellenlängen zu verwenden oder zwei oder mehrere Lichtquellen mit jeweils verschiedenen Emissionswellenlängen zu verwenden, wobei das Signal der ersten Wellenlänge durch den ersten Detektor ausgewertet wird und das Signal der zweiten Wellenlänge mittels des zweiten Detektors. Dadurch lassen sich zwei oder mehr Triangulationssysteme unter Nutzung einer gemeinsamen Optik realisieren, wobei jedes der Triangulationssysteme auf einen speziellen Entfernungsmessbereich optimiert sein kann. Da das von dem optischen Filter transmittierte Licht senkrecht zu dem von dem optischen Filter reflektierten Licht steht (bei einem Einfallswinkel von 45°), ist es notwendig, den zweiten Detektor ebenfalls senkrecht zu dem ersten Detektor anzuordnen. Dadurch kann es erforderlich sein, den zweiten Detektor auf einer zweiten Leiterplatte anzuordnen, welche senkrecht zu der ersten Leiterplatte steht und mit dieser auf herkömmlich Art und Weise zu verbinden ist.

Vorteilhaft wird diese Ausführungsform dadurch kombiniert, dass in Propagationsrichtung des Lichtes zwischen dem optischen Filter und dem zweiten Detektor ein Reflektor angeordnet ist, welcher den von dem optischen Filter transmittierten zweiten Lichtanteil auf den zweiten Detektor reflektiert. Der von dem optischen Filter transmittierte Lichtanteil fällt somit auf den Reflektor und wird von diesem umgelenkt, bei einem Einfallswinkel des Reflektors von 45° zu dem einfallenden Licht, um 90°. Somit wird das von dem Reflektor reflektierte Licht ebenfalls auf die erste Leiterplatte umgelenkt, so dass der zweite Detektor dort angeordnet werden kann und keine zweite Leiterplatte zur Anordnung des zweiten Detektors erforderlich ist. Somit können der erste und zweite Detektor auf der ersten Leiterplatte nebeneinander angeordnet sein, wobei die von dem optischen Filter bzw. dem Reflektor reflektierten Lichtanteile parallel zueinander ausgerichtet sind.

Der Reflektor kann ebenfalls ein Bandstoppfilter sein. Der Reflektor weist somit ebenfalls einen Frequenzbereich auf, in welchem dieser einen besonders hohen Anteil des einfallenden Lichtes reflektiert, nämlich vorzugsweise einen Anteil von mindestens 90%, bevorzugt mindestens 99% oder besonders bevorzugt mindestens 99,5%. Die Mittenfrequenz des Reflektors entspricht dabei vorteilhaft mindestens einer Wellenlänge des von dem optischen Filter transmittierten Lichtanteils, so dass das Reflexionsspektrum des Reflektors optimal auf das auf ihn treffende Licht angepasst ist.

Vorteilhaft weist der Reflektor ein Reflexionsspektrum auf, welches eine von dem Reflexionsspektrum des optischen Filters abweichende Mittenfrequenz aufweist. Beispielsweise kann das Reflexionsspektrum des optischen Filters eine Mittenfrequenz aufweisen, welche einer Wellenlänge von 785nm entspricht, während das Reflexionsspektrum des Reflektors eine Mittenfrequenz aufweist, welche einer Wellenlänge im Bereich des sichtbaren Umgebungslichts entspricht, beispielsweise 532nm. Insofern kann mittels der Abstandsmesseinrichtung sowohl im sichtbaren Bereich als auch in einem abweichenden Bereich, hier beispielsweise nahes Infrarot, ausgewertet werden.

Weiterhin kann der Reflektor ein Reflexionsspektrum aufweisen, welches im Wesentlichen zwei voneinander getrennte Spektralbereiche aufweist, wie es bei Kantenfiltern der Fall ist. Beispielsweise kann der Reflektor ein Kantenfilter sein, welcher Licht der Wellenlänge größer als 780nm transmittiert (Langpassfilter) und Licht kürzerer Wellenlänge, insbesondere sichtbares Licht, reflektiert.

Es empfiehlt sich, dass die Mittenfrequenz des optischen Filters einer Wellenlänge des von der Lichtquelle emittierten Lichtes entspricht, und dass die Mittenfrequenz des Reflektors einer Wellenlänge des sichtbaren Umgebungslichtes entspricht, wobei die Mittenfrequenz des optischen Filters bevorzugt keiner Wellenlänge des sichtbaren Umgebungslichtes entspricht. Durch diese Ausgestaltung wird sichergestellt, dass die beiden Signale, welche auf unterschiedlichen Wellenlängen basieren, voneinander getrennt werden können und nicht beispielsweise Licht einer bestimmten Wellenlänge sowohl von dem optischen Filter als auch von dem Reflektor zu einem wesentlichen Anteil reflektiert wird. Vielmehr soll dadurch erreicht werden, dass die Signale möglichst präzise und vollständig abhängig von der jeweiligen Wellenlänge getrennt werden. Hierbei empfiehlt es sich insbesondere, dass die Mittenfrequenzen des optischen Filters und des Reflektors einen möglichst großen spektralen Abstand zueinander aufweisen, bevorzugt mindestens 50nm, und dass die Kanten des Filterspektrums möglichst steil verlaufen.

Der Bandstoppfilter kann im Sinne der Erfindung ein Reflexionsprisma, ein Interferenzspiegel, ein halbdurchlässiger Spiegel oder ein Reflexionsgitter sein. Vorteilhaft beim Einsatz selektiv reflektierender Filter (Bandstoppfilter) ist, dass diese gegenüber selektiv transmittierenden Filtern (Bandpassfilter) höhere Reflexionsgrade als die Bandpassfilter Transmissionsgrade erreichen, insbesondere im Fall von Interferenzspiegeln oder Reflexionsgittern als Bandstoppfilter.

Alternativ zu der vorgenannten Ausbildung der Abstandsmesseinrichtung mit einem Bandstoppfilter als optischem Filter schlägt die Erfindung gemäß Anspruch 7 vor, dass der optische Filter ein Bandpassfilter ist, welchem in Transmissionsrichtung ein Reflektor nachgeordnet ist. Auch durch diese Ausführungsform lässt sich erreichen, dass das von der Lichtquelle emittierte Licht in Richtung der Leiterplatte umgelenkt wird, so dass der Detektor auf dieser Leiterplatte angeordnet werden kann und die Verwendung einer zweiten Leiterplatte überflüssig wird. Durch die Kombination eines Bandpassfilters mit einem dahinter angeordneten Reflektor wird die Strahlführung eines Bandstoppfilters nachgebildet, wobei der Reflexionsgrad der Kombination jedoch geringer ist als der Reflexionsgrad des Bandstoppfilters. Insbesondere hängt der resultierende Reflexionsgrad der Kombination von dem Transmissionsgrad des Bandpassfilters und dem Reflexionsgrad des Reflektors ab. Vorteilhaft ist der Transmissionsgrad des Bandpassfilters möglichst hoch, das heißt der Reflexionsgrad möglichst niedrig, und der Reflexionsgrad des Reflektors möglichst hoch. Wie zuvor erwähnt, weisen übliche Bandpassfilter in Bezug auf die Mittenfrequenz einen Transmissionsgrad von ungefähr 90% auf, so dass der Gesamtreflexionsgrad der Kombination zwangsläufig höchstens 90% beträgt. Insofern empfiehlt es sich, einen Reflektor zu verwenden, der einen möglichst hohen Reflexionsgrad zeigt, um die Verluste für das auf den Detektor auftreffende Licht darüber hinaus so gering wie möglich zu halten.

In Zusammenhang mit der Kombination eines Bandpassfilters und eines Reflektors ist erfindungsgemäß vorgesehen, dass der Bandpassfilter ein Interferenzfilter ist. Wesentlich ist dabei, dass der Bandpassfilter in Bezug auf die Mittenfrequenz einen möglichst hohen Transmissionsgrad, das heißt einen möglichst geringen Reflexionsgrad, zeigt.

Alternativ zu den vorgenannten Ausbildungen der Abstandsmesseinrichtung mit einem Bandstoppfilter bzw. einem Bandpassfilter als optischem Filter wird gemäß Anspruch 8 vorgeschlagen, dass der optische Filter ein Kantenfilter mit einem Reflexionsgrad von mindestens 90% in Bezug auf mindestens eine Wellenlänge des gestreuten Lichtes ist. Auch durch diese Ausführungsform lässt sich erreichen, dass das von der Lichtquelle emittierte Licht in Richtung der Leiterplatte umgelenkt wird, so dass der Detektor auf dieser Leiterplatte angeordnet werden kann und die Verwendung einer zweiten Leiterplatte überflüssig wird. Besonders bevorzugt weist der Kantenfilter einen Reflexionsgrad von mindestens 95% oder besonders bevorzugt von 98% auf, wobei der Reflexionsgrad ab einem Betrag von 98% oder besonders bevorzugt auch von größer als 99,5% dem Reflexionsgrad eines Bandstoppfilters entspricht und das auf den Detektor auftreffende Licht somit eine möglichst große Intensität aufweist

Schließlich empfiehlt es sich in allen Fällen, dass die Abstandsmesseinrichtung nur eine Leiterplatte zur Anordnung sowohl der Lichtquelle als auch des optischen Filters und des Detektors bzw. der Detektoren aufweist.

Im Folgenden wird die Erfindung anhand von Ausführungsbeispielen näher erläutert. Es zeigen:
- Fig. 1:: eine perspektivische Ansicht eines erfindungsgemäßen Reinigungsgerätes;
- Fig. 2:: eine Unteransicht des Reinigungsgerätes;
- Fig. 3:: eine (nicht erfindungsgemäße) Abstandsmesseinrichtung gemäß einer ersten Ausführungsform;
- Fig. 4:: eine Abstandsmesseinrichtung gemäß einer zweiten Ausführungsform;
- Fig. 5:: eine (nicht erfindungsgemäße) Abstandsmesseinrichtung gemäß einer dritten Ausführungsform;
- Fig. 6:: eine (nicht erfindungsgemäße) Abstandsmesseinrichtung gemäß einer vierten Ausführungsform;

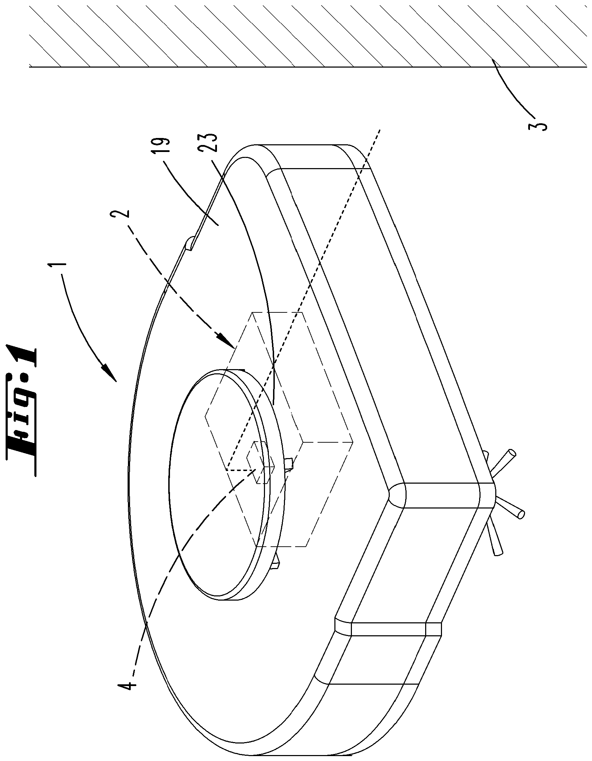

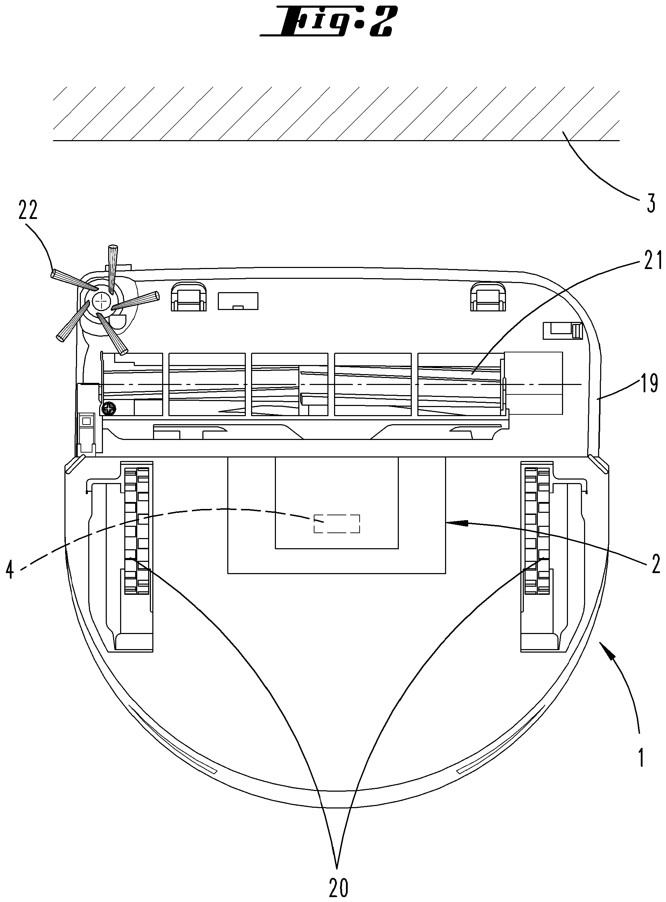

Die Figuren 1 und 2 zeigen ein selbsttätig verfahrbares Reinigungsgerät 1, hier in der Form eines elektromotorisch angetriebenen Saugroboters. Das Reinigungsgerät 1 weist ein Gerätegehäuse 19 auf, welches unter anderem zumindest teilweise zwei Räder 20, eine Reinigungswalze 21, eine Bürste 22 und eine Abstandsmesseinrichtung 2 umschließt. Des Weiteren ist an der nach oben weisenden Seite des Gerätegehäuses 19 ein Lichtaustritt 23 angeordnet, durch welchen von einer Lichtquelle 4 der Abstandsmesseinrichtung 2 emittiertes Licht nach außen treten kann. Die Abstandsmesseinrichtung 2 ist um 360° drehbar innerhalb des Gerätegehäuses 19 angeordnet, wobei der Lichtaustritt 23 dazu korrespondierend in einer horizontalen Austrittsebene um 360° geöffnet ist, so dass Licht in einem 360°-Winkelbereich austreten kann. Vor dem Reinigungsgerät 1 befindet sich ein Objekt 3, auf welches das Reinigungsgerät 1 zufährt.

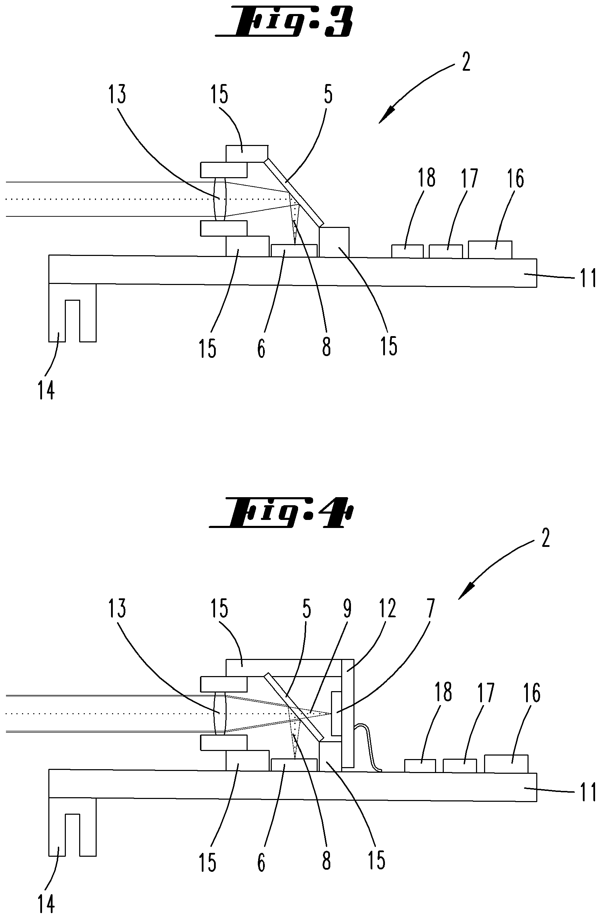

Die Figuren 3 bis 6 zeigen vier verschiedene Ausführungsformen einer Abstandsmesseinrichtung 2. Die Abstandsmesseinrichtungen 2 weisen jeweils eine Lichtquelle 4, einen optischen Filter 5 und einen Detektor 6 auf, welche in einer optischen Strahlanordnung so angeordnet sind, dass von der Lichtquelle 4 (in den Figuren 3 bis 6 nicht dargestellt) emittiertes Licht, welches an dem Objekt 3 gestreut wurde, zuerst auf eine Optik 13 trifft, welche beispielsweise eine Fokussierlinse ist, anschließend mittels des optischen Filters 5 spektral gefiltert wird und schließlich zumindest in Bezug auf einen ersten Lichtanteil 8 von einem Detektor 6 detektiert wird. Dabei sind sowohl die Optik 13, der optische Filter 5 und der erste Detektor 6 auf der ersten Leiterplatte 11 der Abstandsmesseinrichtung 2 angeordnet.

Die erste Leiterplatte 11 weist darüber hinaus eine Lichtschranke 14, hier als Gabellichtschranke ausgebildet, auf, welche die Winkelorientierung der drehbar in dem Gerätegehäuse 19 angeordneten Abstandsmesseinrichtung 2 festlegt. An der ersten Leiterplatte 11 sind zudem ein Spannungsregler 16, ein Prozessor 17 (Mikrocontroller) und eine Lasertreiberelektronik 18 angeordnet. Die erste Leiterplatte 11 trägt zudem ein Messeinrichtungsgehäuse 15, welches die einzelnen Komponenten der Abstandsmesseinrichtung 2 hält.

Zusätzlich zu den zuvor dargestellten Komponenten weist die in Figur 4 dargestellte Abstandsmesseinrichtung 2 zusätzlich einen zweiten Detektor 7 auf, welcher in Transmissionsrichtung des Lichtes hinter dem optischen Filter 5 angeordnet ist. Der zweite Detektor 7 ist auf einer zweiten Leiterplatte 12 angeordnet, welche wiederum von der ersten Leiterplatte 11 getragen wird.

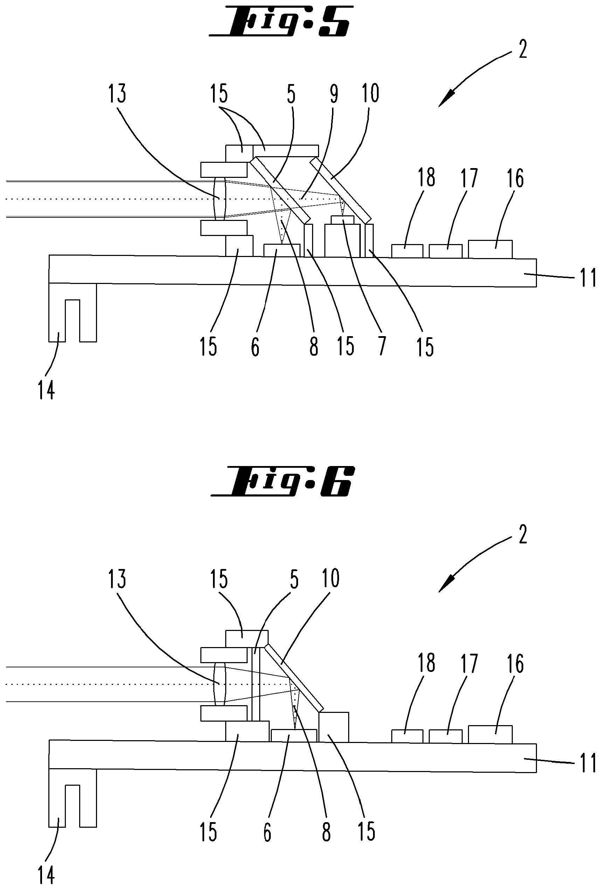

Die Abstandsmesseinrichtung 2 gemäß Figur 5 weist in Transmissionsrichtung des optischen Filters 5 einen Reflektor 10 auf, sowie einen zweiten Detektor 7. Der Reflektor 10 und der zweite Detektor 7 sind auf der ersten Leiterplatte 11 angeordnet.

Die Abstandsmesseinrichtung 2 gemäß Figur 6 weist in Transmissionsrichtung hinter dem optischen Filter einen Reflektor 10 sowie den ersten Detektor 6 auf. Sowohl der Reflektor 10 als auch der erste Detektor 6 sind auf der ersten Leiterplatte 11 angeordnet.

Im Folgenden wird die Funktionsweise der einzelnen Abstandsmesseinrichtungen 2 erläutert.

In der in Figur 3 dargestellten - nicht erfindungsgemäßen - Abstandsmesseinrichtung 2 ist der optische Filter 5 als Bandstoppfilter ausgebildet. Dieser weist einen Reflexionsgrad von beispielsweise 99% in Bezug auf seine Mittenfrequenz auf, welche hier beispielsweise der Wellenlänge einer optischen Laserdiode (Lichtquelle 4) von 785nm entspricht. Der optische Filter 5 ist hier beispielsweise als monochromatischer Filter ausgebildet, so dass dieser ein scharfes Reflexionsmaximum bei 785nm aufweist. Die Reflexionsgrade in Bezug auf weitere Wellenlängen gehen gegen null. Das von dem Objekt 3 reflektierte Licht gelangt somit auf den optischen Filter 5 und wird mit einem Anteil, dem ersten Lichtanteil 8, zu 99% reflektiert. Der übrige Lichtanteil von 1% wird von dem optischen Filter 5 absorbiert oder transmittiert (in Figur 3 nicht dargestellt) und gelangt nicht zu dem Detektor 6. Der erste Lichtanteil 8 trifft auf den Detektor 6 und wird dort im Rahmen der optischen Triangulation ausgewertet. Dazu verfügt die Abstandsmesseinrichtung 2 über den Prozessor 17.

Der Bandstoppfilter ist beispielsweise als Interferenzspiegel ausgebildet, z.B. als ein Glassubstrat mit einer mehrlagigen dielektrischen Beschichtung. Je nach dem gewünschten Reflexionsgrad und der gewünschten Mittenfrequenz des Bandstoppfilters sind unterschiedliche Beschichtungsmaterialien und gegebenenfalls auch Substratwerkstoffe einzusetzen.

Alternativ zu der Ausbildung des optischen Filters als Bandstoppfilter kommen auch andere Ausführungsformen in Frage, beispielsweise Kantenfilter (Langpass, Kurzpass) oder Verlaufsfilter. Diese weisen dann beispielsweise typische Reflexionsgrade auf. In Bezug auf einen Kantenfilter kann der Reflexionsgrad beispielsweise mindestens 90% betragen. Der gezeigte optische Strahlengang bleibt im Übrigen erhalten.

Durch die wellenlängenselektive Reflexion des optischen Filters 5 kann das von der Lichtquelle 4 emittierte Licht von dem Umgebungslicht der Abstandsmesseinrichtung 2 getrennt werden, welches ebenfalls von dem zu vermessenden Objekt 3 gestreut wird und somit auch auf die Optik 13 und den optischen Filter 5 trifft. Mit Hilfe der wellenlängenabhängigen Reflexionsgrade wird somit das Licht der Lichtquelle 4 von dem Umgebungslicht getrennt, so dass das Licht der Lichtquelle 4 ausschließlich oder zu einem im Verhältnis zum Umgebungslicht überwiegenden Teil zu dem Messergebnis beiträgt.

Figur 4 zeigt eine erfindungsgemäße Ausführungsform. Darin ist in Transmissionsrichtung des optischen Filters 5 hinter dem optischen Filter 5 ein zweiter Detektor 7 angeordnet, welcher ausgebildet ist, das von dem optischen Filter 5 transmittierte Licht zu detektieren. Bei dieser Ausführungsform weist das von der Lichtquelle 4 emittierte und somit auch von dem Objekt 3 reflektierte Licht mindestens zwei verschiedene Wellenlängen auf. Eine erste Wellenlänge entspricht dabei der Mittenfrequenz des optischen Filters 5, so dass der entsprechende erste Lichtanteil 8 von dem optischen Filter 5 reflektiert wird und auf den ersten Detektor 6 trifft. Ein zweiter Lichtanteil 9, in Bezug auf welchen der optische Filter 5 nur einen geringen Reflexionsgrad aufweist, wird von dem optischen Filter 5 transmittiert und gelangt auf den zweiten Detektor 7. Der zweite Detektor 7 ist ebenfalls mit dem Prozessor 17 verbunden und kann entsprechend Detektor 6 ausgewertet werden. Darüber hinaus kann der zweite Detektor 7 auch zur Detektion von Umgebungslicht und/oder zur Detektion eines von dem optischen Filter 5 transmittierten Lichtanteils, welcher eine der Mittelfrequenz entsprechende Wellenlänge aufweist, dienen. Bei einem Reflexionsgrad von 98% entspricht dieser transmittierte Anteil beispielsweise 2%.

Sowohl der erste Detektor 6 als auch der zweite Detektor 7 können als Fotodioden, Fotodioden-Arrays und/oder CCD-\CMOS-Chips ausgebildet sein. Die Detektoren 6, 7 können dabei zusätzlich nur in Bezug auf einzelne Wellenlängen oder bestimmte Wellenlängenbereiche detektieren, so dass zusätzlich eine Wellenlängenselektion stattfinden kann.

Gemäß der gezeigten Ausführungsformen ist es somit möglich, dass der Detektor 6 das Licht einer ersten Wellenlänge, beispielsweise 785nm misst, während der zweite Detektor 7 Licht mit einer abweichenden Wellenlänge misst, beispielsweise 532nm. Somit kann das von dem Objekt 3 reflektierte Licht in Bezug auf zwei verschiedene Wellenlängen ausgewertet werden, was es ermöglicht, zusätzliche Informationen über das Objekt zu erfassen, insbesondere die Farbe seiner Oberfläche. Dies kann insbesondere bei Objekten 3 vorteilhaft sein, welche aufgrund ihrer Oberflächeneigenschaften in Bezug auf bestimmte Wellenlängen oder Wellenlängenbereiche einen nur geringen Reflexionsgrad aufweisen, so dass einer der Detektoren 6, 7 beispielsweise nur eine geringe Lichtintensität detektieren könnte.

Das Ausführungsbeispiel gemäß Figur 5 zeigt eine - nicht erfindungsgemäße - Abstandsmesseinrichtung 2, welche ebenfalls einen optischen Filter 5 und einen ersten Detektor 6 aufweist. Wie bereits auch in Bezug auf die vorhergehenden Figuren erläutert, ist der optische Filter 5 als Bandstoppfilter ausgebildet, so dass dieser das von dem Objekt 3 reflektierte Licht in Bezug auf die Mittenfrequenz zu einem sehr hohen Reflexionsgrad von beispielsweise 99,5% auf den Detektor 6 reflektiert. Der von dem optischen Filter 5 transmittierte zweite Lichtanteil 9, welcher von der Mittenfrequenz des optischen Filters 5 abweichende Wellenlängen aufweist, trifft auf den Reflektor 10, von welchem er zumindest teilweise reflektiert wird. Der Reflektor 10 kann ebenfalls ein Bandstoppfilter sein, welcher vorteilhaft eine Mittenfrequenz aufweist, welche von der Mittenfrequenz des optischen Filters abweicht. Alternativ kann der Reflektor 10 auch als Breitbandreflektor ausgebildet sein, welcher über einen großen Frequenzbereich einen annähernd hohen Reflexionsgrad aufweist. Das von dem Reflektor 10 reflektierte Licht trifft auf den zweiten Detektor 7 und kann dort ausgewertet werden. Gemäß dieser Ausführungsform sind sowohl der erste Detektor 6 als auch der zweite Detektor 7 auf der ersten Leiterplatte 11 angeordnet, so dass keine zweite Leiterplatte 12 erforderlich ist. Der Reflektor 10 kann ein metallischer Spiegel, ein aus dielektrischen Schichten aufgebauter Interferenzspiegel oder auch ein Reflexionsprisma sein. Die Oberflächen des Reflektors 10 und des optischen Filters 5 sind bevorzugt planar, können aber auch mikrostrukturiert sein, wie es bei einer Fresnellinse oder einem Lenslet der Fall ist.

Alternativ kann es sich bei dem optischen Filter 5 beispielsweise auch um einen Kantenfilter handeln, welcher gegebenenfalls einen geringeren Reflexionsgrad (jedoch mindestens 90%) aufweist.

Figur 6 zeigt eine weitere - nicht erfindungsgemäße - Ausführungsform, bei welcher die Abstandsmesseinrichtung 2 in Propagationsrichtung des von dem Objekt 3 reflektierten Lichtes hinter der Optik 13 zuerst einen optischen Filter 5, welcher als Bandpassfilter ausgebildet ist und dann einen Reflektor 10 aufweist. Der als Bandpassfilter ausgebildete optische Filter 5 ist so ausgebildet, dass dieser Licht transmittiert, welches der Wellenlänge der Lichtquelle 4 entspricht. Der Bandpassfilter weist in Bezug auf diese Wellenlänge einen hohen Transmissionsgrad auf, welcher beispielsweise 90% beträgt. Der von dem Bandpassfilter transmittierte erste Lichtanteil 8 trifft auf den Reflektor 10, welcher in Bezug auf die Wellenlänge des ersten Lichtanteils 8 einen hohen Reflexionsgrad zeigt. Das von dem Reflektor 10 reflektierte Licht trifft auf den ersten Detektor 6 und wird mittels des Prozessors 17 ausgewertet. Der Bandpassfilter kann ein Transmissionsprisma, ein Transmissionsgitter, ein Strahlteiler oder auch ein Lenslet-Array, welches aus einer Vielzahl einzelner Linsen besteht, sein. Gemäß dieser Ausführungsform sind die Komponenten der Abstandsmesseinrichtung 2 ebenfalls auf einer gemeinsamen Leiterplatte, nämlich der ersten Leiterplatte 11, angeordnet, so dass eine zweite Leiterplatte 12 entfällt. Im Gegensatz zu den zuvor dargestellten Ausführungsformen ist die Lichtintensität des auf den ersten Reflektor 6 treffenden ersten Lichtanteils 8 geringer, da der Transmissionsgrad des optischen Filters 5 geringer ist als die Reflexionsgrade üblicher Bandstoppfilter.

Obwohl die Abstandsmesseinrichtung 2 hier als um 360° drehbar beschrieben wurde, ist es selbstverständlich auch möglich, diese drehfest innerhalb des Gerätegehäuses 19 anzuordnen. Bei einer solchen Ausführungsform können Abstandsmessungen nur in einer bestimmten Richtung (z. B. aktuelle Fahrtrichtung des Reinigungsgerätes 1) durchgeführt werden.

### Bezugszeichenliste

1 Reinigungsgerät
2 Abstandsmesseinrichtung
3 Objekt
4 Lichtquelle
5 Optischer Filter
6 Erster Detektor
7 Zweiter Detektor
8 Erster Lichtanteil
9 Zweiter Lichtanteil
10 Reflektor
11 Erste Leiterplatte
12 Zweite Leiterplatte
13 Optik
14 Lichtschranke
15 Messeinrichtungsgehäuse
16 Spannungsregler
17 Prozessor
18 Lasertreiberelektronik
19 Gerätegehäuse
20 Rad
21 Reinigungswalze
22 Bürste
23 Lichtaustritt

## Patentansprüche

1. Selbsttätig verfahrbares Reinigungsgerät (1), insbesondere elektromotorisch angetriebener Saug- und/oder Wischroboter, mit einer Abstandsmesseinrichtung (2) zur Messung des Abstandes des Reinigungsgerätes (1) zu einem Objekt (3), wobei die Abstandsmesseinrichtung (2) ein optisches Triangulationssystem mit einer Lichtquelle (4), einem optischen Filter (5) und einem Detektor (6) aufweist, welche so angeordnet sind, dass von der Lichtquelle (4) emittiertes Licht in Propagationsrichtung zuerst von dem Objekt (3) gestreut wird, wobei zumindest ein Anteil des gestreuten Lichtes anschließend mittels des optischen Filters (5) spektral gefiltert wird und wobei das gefilterte Licht schließlich von dem Detektor (6) detektiert wird, **dadurch gekennzeichnet, dass** das optische Triangulationssystem in Bezug auf eine Leiterplatte (11) so angeordnet ist, dass das von dem Objekt (3) gestreute Licht parallel zu der Leiterplatte (11) propagiert bevor es auf den optischen Filter (5) trifft, und wobei das Licht durch den optischen Filter (5) umgelenkt wird, so dass es in eine Richtung senkrecht zu der Leiterplatte (11) propagiert, wobei der Detektor (6) auf derselben Leiterplatte (11) angeordnet ist, und wobei der optische Filter (5) ein Bandstoppfilter mit einem Reflexionsgrad von mindestens 90% in Bezug auf mindestens eine Wellenlänge des gestreuten Lichtes ist, und wobei das Triangulationssystem zwei Detektoren (6, 7) aufweist, wobei ein erster Detektor (6) bezogen auf den optischen Filter (5) in Reflexionsrichtung angeordnet ist, um einen von dem optischen Filter (5) reflektierten ersten Lichtanteil (8) zu detektieren, und wobei ein zweiter Detektor (7) bezogen auf den optischen Filter (5) in Transmissionsrichtung angeordnet ist, um einen von dem optischen Filter (5) transmittierten zweiten Lichtanteil (9) zu detektieren.

2. Reinigungsgerät (1) nach Anspruch 1, **dadurch gekennzeichnet, dass** in Propagationsrichtung des Lichtes zwischen dem optischen Filter (5) und dem zweiten Detektor (7) ein Reflektor (10) angeordnet ist, welcher den von dem optischen Filter (5) transmittierten zweiten Lichtanteil (9) auf den zweiten Detektor (7) reflektiert.

3. Reinigungsgerät (1) nach Anspruch 2, **dadurch gekennzeichnet, dass** der Reflektor (10) ein Bandstoppfilter ist.

4. Reinigungsgerät (1) nach Anspruch 2, **dadurch gekennzeichnet, dass** der Reflektor (10) ein Reflexionsspektrum aufweist, welches eine von dem Reflexionsspektrum des optischen Filters (5) abweichende Mittenfrequenz aufweist.

5. Reinigungsgerät (1) nach Anspruch 3 oder 4, **dadurch gekennzeichnet, dass** die Mittenfrequenz des optischen Filters (5) einer Wellenlänge des von der Lichtquelle (4) emittierten Lichtes entspricht, und dass die Mittenfrequenz des Reflektors (10) einer Wellenlänge des sichtbaren Umgebungslichtes entspricht, wobei die Mittenfrequenz des optischen Filters (5) bevorzugt keiner Wellenlänge des sichtbaren Umgebungslichtes entspricht.

6. Reinigungsgerät (1) nach einem der vorhergehenden Ansprüche, **dadurch gekennzeichnet, dass** der Bandstoppfilter ein Interferenzspiegel ist.

7. Selbsttätig verfahrbares Reinigungsgerät (1), insbesondere elektromotorisch angetriebener Saug- und/oder Wischroboter, mit einer Abstandsmesseinrichtung (2) zur Messung des Abstandes des Reinigungsgerätes (1) zu einem Objekt (3), wobei die Abstandsmesseinrichtung (2) ein optisches Triangulationssystem mit einer Lichtquelle (4), einem optischen Filter (5) und einem Detektor (6) aufweist, welche so angeordnet sind, dass von der Lichtquelle (4) emittiertes Licht in Propagationsrichtung zuerst von dem Objekt (3) gestreut wird, wobei zumindest ein Anteil des gestreuten Lichtes anschließend mittels des optischen Filters (5) spektral gefiltert wird und wobei das gefilterte Licht schließlich von dem Detektor (6) detektiert wird, **dadurch gekennzeichnet, dass** das optische Triangulationssystem in Bezug auf eine Leiterplatte (11) so angeordnet ist, dass das von dem Objekt (3) gestreute Licht parallel zu der Leiterplatte (11) propagiert bevor es auf den optischen Filter (5) trifft, und wobei das Licht durch den optischen Filter (5) umgelenkt wird, so dass es in eine Richtung senkrecht zu der Leiterplatte (11) propagiert, wobei der Detektor (6) auf derselben Leiterplatte (11) angeordnet ist, und wobei der optische Filter (5) ein Bandpassfilter ist, welchem in Transmissionsrichtung ein Reflektor (10) nachgeordnet ist, wobei der Bandpassfilter ein Interferenzfilter ist.

8. Selbsttätig verfahrbares Reinigungsgerät (1), insbesondere elektromotorisch angetriebener Saug- und/oder Wischroboter, mit einer Abstandsmesseinrichtung (2) zur Messung des Abstandes des Reinigungsgerätes (1) zu einem Objekt (3), wobei die Abstandsmesseinrichtung (2) ein optisches Triangulationssystem mit einer Lichtquelle (4), einem optischen Filter (5) und einem Detektor (6) aufweist, welche so angeordnet sind, dass von der Lichtquelle (4) emittiertes Licht in Propagationsrichtung zuerst von dem Objekt (3) gestreut wird, wobei zumindest ein Anteil des gestreuten Lichtes anschließend mittels des optischen Filters (5) spektral gefiltert wird und wobei das gefilterte Licht schließlich von dem Detektor (6) detektiert wird, **dadurch gekennzeichnet, dass** das optische Triangulationssystem in Bezug auf eine Leiterplatte (11) so angeordnet ist, dass das von dem Objekt (3) gestreute Licht parallel zu der Leiterplatte (11) propagiert bevor es auf den optischen Filter (5) trifft, und wobei das Licht durch den optischen Filter (5) umgelenkt wird, so dass es in eine Richtung senkrecht zu der Leiterplatte (11) propagiert, wobei der Detektor (6) auf derselben Leiterplatte (11) angeordnet ist, und wobei der optische Filter (5) ein Kantenfilter mit einem Reflexionsgrad von mindestens 90% in Bezug auf mindestens eine Wellenlänge des gestreuten Lichtes ist, und wobei die Abstandsmesseinrichtung (2) nur eine Leiterplatte (11) zur Anordnung sowohl der Lichtquelle (4) als auch des optischen Filters (5) und des Detektors (6, 7) aufweist.

## Claims

1. An automatically displaceable cleaning device (1), in particular an electric motor-driven vacuuming and/or wiping robot, with a distance measuring device (2) for measuring the distance of the cleaning device (1) from an object (3), wherein the distance measuring device (2) exhibits an optical triangulation system with a light source (4), an optical filter (5) and a detector (6), which are arranged in such a way that light emitted by the light source (4) in the propagation direction is first scattered by the object (3), wherein at least a portion of the scattered light is subsequently spectrally filtered by the optical filter (5), and wherein the filtered light is finally detected by the detector (6), **characterized in that** the optical triangulation system is arranged with respect to a circuit board (11) such that the light scattered by the object (3) propagates parallel to the circuit board (11) before it hits the optical filter (5), and wherein the light is deflected by the optical filter (5), so that it propagates in a direction perpendicular to the circuit board (11), wherein the detector (6) is arranged on the same circuit board (11), and wherein the optical filter (5) is a band stop filter with a reflectance of at least 90% in relation to at least one wavelength of the scattered light, and wherein the triangulation system comprises two detectors (6, 7), wherein a first detector (6) is situated in the reflection direction relative to the optical filter (5), so as to detect a first light component (8) reflected by the optical filter (5), and wherein a second detector (7) is situated in the transmission direction relative to the optical filter (5), so as to detect a second light component (9) transmitted by the optical filter (5).

2. The cleaning device (1) according to claim 1, **characterized in that** a reflector (10) is placed in the propagation direction of the light between the optical filter (5) and the second detector (7), which reflects the second light component (9) transmitted by the optical filter (5) to the second detector (7).

3. The cleaning device (1) according to claim 2, **characterized in that** the reflector (10) is a band stop filter.

4. The cleaning device (1) according to claim 2, **characterized in that** the reflector (10) exhibits a reflection spectrum that has a mean frequency deviating from the reflection spectrum of the optical filter (5).

5. The cleaning device (1) according to claim 3 or 4, **characterized in that** the mean frequency of the optical filter (5) corresponds to a wavelength of the light emitted by the light source (4), and that the mean frequency of the reflector (10) corresponds to a wavelength of the visible ambient light, wherein the mean frequency of the optical filter (5) preferably does not correspond to any wavelength of the visible ambient light.

6. The cleaning device (1) according to one of the preceding claims, **characterized in that** the band stop filter is an interference mirror.

7. An automatically displaceable cleaning device (1), in particular an electric motor-driven vacuuming and/or wiping robot, with a distance measuring device (2) for measuring the distance of the cleaning device (1) from an object (3), wherein the distance measuring device (2) exhibits an optical triangulation system with a light source (4), an optical filter (5) and a detector (6), which are arranged in such a way that light emitted by the light source (4) in the propagation direction is first scattered by the object (3), wherein at least a portion of the scattered light is subsequently spectrally filtered by the optical filter (5), and wherein the filtered light is finally detected by the detector (6), **characterized in that** the optical triangulation system is arranged with respect to a circuit board (11) such that the light scattered by the object (3) propagates parallel to the circuit board (11) before it hits the optical filter (5), and wherein the light is deflected by the optical filter (5), so that it propagates in a direction perpendicular to the circuit board (11), wherein the detector (6) is arranged on the same circuit board (11), and wherein the optical filter (5) is a band-pass filter downstream of which a reflector (10) is arranged in the transmission direction, wherein the band-pass filter is an interference filter.

8. An automatically displaceable cleaning device (1), in particular an electric motor-driven vacuuming and/or wiping robot, with a distance measuring device (2) for measuring the distance of the cleaning device (1) from an object (3), wherein the distance measuring device (2) exhibits an optical triangulation system with a light source (4), an optical filter (5) and a detector (6), which are arranged in such a way that light emitted by the light source (4) in the propagation direction is first scattered by the object (3), wherein at least a portion of the scattered light is subsequently spectrally filtered by the optical filter (5), and wherein the filtered light is finally detected by the detector (6), **characterized in that** the optical triangulation system is arranged with respect to a circuit board (11) such that the light scattered by the object (3) propagates parallel to the circuit board (11) before it hits the optical filter (5), and wherein the light is deflected by the optical filter (5), so that it propagates in a direction perpendicular to the circuit board (11), wherein the first detector (6) is arranged on the same circuit board (11), and wherein the optical filter (5) is an edge filter with a reflectance of at least 90% in relation to at least one wavelength of the scattered light, and wherein the distance measuring device (2) exhibits only one circuit board (11) for the arrangement of both the light source (4) and the optical filter (5) and the detector (6, 7).

## Revendications

1. Appareil de nettoyage déplaçable automatiquement (1), en particulier robot d'aspiration et/ou d'essuyage entraîné par un moteur électrique, avec un dispositif de mesure de distance (2) pour mesurer la distance de l'appareil de nettoyage (1) par rapport à un objet (3), le dispositif de mesure de distance (2) présentant un système de triangulation optique avec une source de lumière (4), un filtre optique (5) et un détecteur (6), qui sont disposés de telle manière, que la lumière émise par la source de lumière (4) est d'abord diffusée par l'objet (3) dans la direction de propagation, au moins une partie de la lumière diffusée étant ensuite filtrée spectralement au moyen du filtre optique (5), et la lumière filtrée étant finalement détectée par le détecteur (6), **caractérisé en ce que** le système de triangulation optique est disposé par rapport à une carte de circuit imprimé (11) de sorte, que la lumière diffusée par l'objet (3) se propage parallèlement à la carte de circuit imprimé (11) avant de frapper le filtre optique (5), et dans lequel la lumière est déviée par le filtre optique (5) de sorte qu'elle se propage dans une direction perpendiculaire à la carte de circuit imprimé (11), dans lequel le détecteur (6) est disposé sur la même carte de circuit imprimé (11), et dans lequel le filtre optique (5) est un filtre coupe-bande ayant une réflectivité d'au moins 90% par rapport à au moins une longueur d'onde de la lumière diffusée, et dans lequel le système de triangulation comprend deux détecteurs (6, 7), un premier détecteur (6) étant disposé par rapport au filtre optique (5) dans le sens de la réflexion pour détecter une première composante de lumière (8) réfléchie par le filtre optique (5), et un deuxième détecteur (7) étant disposé par rapport au filtre optique (5) dans le sens de la transmission pour détecter une deuxième composante de lumière (9) transmise par le filtre optique (5).

2. Appareil de nettoyage (1) selon la revendication 1, **caractérisé en ce que**, dans le sens de propagation de la lumière, un réflecteur (10) est disposé entre le filtre optique (5) et le deuxième détecteur (7), lequel réfléchit la deuxième partie de la lumière (9) transmise par le filtre optique (5) sur le deuxième détecteur (7).

3. Appareil de nettoyage (1) selon la revendication 2, **caractérisé en ce que** le réflecteur (10) est un filtre d'arrêt de bande.

4. Appareil de nettoyage (1) selon la revendication 2, **caractérisé en ce que** le réflecteur (10) présente un spectre de réflexion qui présente une fréquence centrale différente du spectre de réflexion du filtre optique (5).

5. Appareil de nettoyage (1) selon la revendication 3 ou 4, **caractérisé en ce que** la fréquence centrale du filtre optique (5) correspond à une longueur d'onde de la lumière émise par la source lumineuse (4), et **en ce que** la fréquence centrale du réflecteur (10) correspond à une longueur d'onde de la lumière ambiante visible, la fréquence centrale du filtre optique (5) ne correspondant de préférence à aucune longueur d'onde de la lumière ambiante visible.

6. Appareil de nettoyage (1) selon l'une des revendications précédentes, **caractérisé en ce que** le filtre d'arrêt de bande est un miroir d'interférence.

7. Appareil de nettoyage (1) déplaçable automatiquement, en particulier robot d'aspiration et/ou d'essuyage entraîné par moteur électrique, avec un dispositif de mesure de distance (2) pour mesurer la distance de l'appareil de nettoyage (1) par rapport à un objet (3), le dispositif de mesure de distance (2) présentant un système de triangulation optique avec une source lumineuse (4), un filtre optique (5) et un détecteur (6), qui sont disposés de telle sorte que la lumière émise par la source de lumière (4) est d'abord diffusée par l'objet (3) dans la direction de propagation, au moins une partie de la lumière diffusée étant ensuite filtrée spectralement au moyen du filtre optique (5) et la lumière filtrée étant finalement détectée par le détecteur (6), **caractérisé en ce que** le système de triangulation optique est disposé par rapport à une carte de circuit imprimé (11) de telle sorte que la lumière diffusée par l'objet (3) se propage parallèlement à la carte de circuit imprimé (11) avant de frapper le filtre optique (5), et dans lequel la lumière est déviée par le filtre optique (5), de sorte qu'elle se propage dans une direction perpendiculaire à la carte à circuits imprimés (11), et dans lequel le détecteur (6) étant disposé sur la même carte à circuits imprimés (11), et dans lequel le filtre optique (5) étant un filtre passe-bande en aval duquel est disposé un réflecteur (10) dans la direction de transmission, dans lequel le filtre passe-bande étant un filtre interférentiel.

8. Appareil de nettoyage (1) déplaçable automatiquement, en particulier robot d'aspiration et/ou d'essuyage entraîné par un moteur électrique, avec un dispositif de mesure de distance (2) pour mesurer la distance de l'appareil de nettoyage (1) par rapport à un objet (3), le dispositif de mesure de distance (2) présentant un système de triangulation optique avec une source lumineuse (4), un filtre optique (5) et un détecteur (6), qui sont disposés de telle sorte que la lumière émise par la source de lumière (4) est d'abord diffusée par l'objet (3) dans la direction de propagation, dans lequel au moins une partie de la lumière diffusée étant ensuite filtrée spectralement au moyen du filtre optique (5), et dans lequel la lumière filtrée étant finalement détectée par le détecteur (6), **caractérisé en ce que** le système de triangulation optique est disposé par rapport à une carte de circuit imprimé (11) de telle sorte que la lumière diffusée par l'objet (3) se propage parallèlement à la carte de circuit imprimé (11) avant de frapper le filtre optique (5), et dans lequel la lumière est déviée par le filtre optique (5) de telle sorte qu'elle se propage dans une direction perpendiculaire à la carte de circuit imprimé (11), dans lequel le détecteur (6) est disposé sur la même carte de circuit imprimé (11), et dans lequel le filtre optique (5) est un filtre de bord ayant une réflectivité d'au moins 90 % par rapport à au moins une longueur d'onde de la lumière diffusée, et dans lequel le dispositif de mesure de distance (2) n'en a qu'une carte de circuit imprimé (11) pour disposer à la fois la source de lumière (4), le filtre optique (5) et le détecteur (6, 7).
